# EUROPÄISCHE PATENTANMELDUNG

(11) **EP 3 677 609 A1**
(43) Veröffentlichungstag der Anmeldung: **08.07.2020**
(21) Anmeldenummer: 19219310.0
(22) Anmeldetag: 23.12.2019
(51) Int. Cl.: C08G 18/50, C08G 18/73, C08G 18/78, C08G 18/79, C08G 18/38

(54) **SPRITZBARE POLYUREA-ZUSAMMENSETZUNG FÜR DEN KORROSIONSSCHUTZ**

(30) Priorität: 03.01.2019 EP 19150159
(71) Anmelder: SIKA TECHNOLOGY AG, 6340 Baar (CH)
(72) Erfinder: Viertel, Johannes, 71665 Vaihingen (CH); Viertel, Gemma, 71665 Vaihingen (DE)
(74) Vertreter: Sika Patent Attorneys

(57) **Zusammenfassung**

Die vorliegende Erfindung betrifft eine Zusammensetzung bestehend aus einer ersten Komponente enthaltend mindestens ein Polyasparaginsäureester P1 sowie eine Mischung verschiedener Polyetherasparaginsäureester P2, und einer zweite Komponente enthaltend ein aliphatisches Polyisocyanat. Die Zusammensetzung ist besonders geeignet als sprühbare Korrosionsschutzbeschichtung für Metallsubstrate. Sie verfügt über eine Viskosität, welche eine Applikation durch Spritzen ermöglicht und die Anforderungen nach dem Offshore test DIN EN ISO 12944 Teil 9 erfüllt. Weiter weist die Zusammensetzung eine gute Lagerstabilität, eine gute Filmbildung und eine ausreichende Shore D Härte auf. Weiter lassen sich daraus Zusammensetzungen mit einer Trocknungszeit für einen Trockengrad TG 6 von weniger als 20 Stunden, insbesondere zwischen 4 - 8 Stunden, formulieren.

## Beschreibung

### Technisches Gebiet

Die Erfindung betrifft eine bei Raumtemperatur flüssig applizierbare reaktive Polyurea-Zusammensetzung, welche als Beschichtung, insbesondere als Korrosionsschutzbeschichtung, für Metalloberflächen im Hochbau oder in industriellen Anlagen einsetzbar ist.

### Stand der Technik

Reaktive Polyurethan-Zusammensetzungen, welche als Korrosionsschutzbeschichtungen oder Korrosionsschutzanstriche eingesetzt werden, insbesondere im Offshore-Bereich, sind seit längerem Stand der Technik. Typischerweise handelt es sich dabei um hochviskose Systeme, welche mit einem Roller oder einem Pinsel appliziert werden. Meist müssen diese Systeme in mehreren Schichten appliziert werden, damit ein ausreichender Korrosionsschutz gewährleistet ist. Auch sind solche Systeme oft auf das Vorhandensein einer Primerschicht auf dem zu schützenden Substrat, typischerweise einen Epoxy-Primer, angewiesen.

Um solche Produkte spritzbar herzustellen könnte beispielsweise ein beträchtlicher Anteil an flüchtigen organischen Lösemitteln zugegeben werden, um die Viskosität zu senken und somit die Spritzbarkeit sicherzustellen. Dies ist jedoch aufgrund des Umwelt- und Gesundheitsschutzes nachteilig, da die Zusammensetzungen dadurch hohe VOC-Emissionen aufweisen.

Weiter müssen solche Systeme die strengen Anforderungen der Korrosionsschutzprüfungen erfüllen, insbesondere der Anforderungen nach dem Offshore Test DIN EN ISO 12944 Teil 9 (Beschichtungssysteme und Leistungsprüfverfahren im Labor für Bauwerke im Offshorebereich).

Es besteht daher der Bedarf an zweikomponentigen reaktiven Beschichtungen, welche vergleichsweise niedrigviskos sind, sich einfach durch Spritzen applizieren lassen und die Anforderungen nach dem Offshore Test DIN EN ISO 12944 Teil 9 erfüllen. Weiter wäre es wünschenswert, wenn solche Systeme bereits nach Auftrag einer einzigen Schicht, vorzugsweise ohne eine Primerschicht zu benötigen, die vorgenannten Korrosionsschutzanforderungen erfüllen.

### Darstellung der Erfindung

Aufgabe der vorliegenden Erfindung ist es daher, eine Polyureazusammensetzung zur Verfügung zu stellen, welche sich als zweikomponentige Korrosionsbeschichtung und -anstrich eignet, eine Viskosität aufweist, welche eine Applikation durch Spritzen ermöglicht und die Anforderungen nach dem Offshore Test DIN EN ISO 12944 Teil 9 erfüllt.

Überraschenderweise wurde gefunden, dass eine Zusammensetzung nach Anspruch 1 diese Aufgabe löst.

Weiter weist die Zusammensetzung eine gute Lagerstabilität, eine gute Filmbildung und eine ausreichende Shore D Härte auf. Weiter lassen sich daraus Zusammensetzungen mit einer Trocknungszeit für einen Trockengrad TG 6 von weniger als 20 Stunden, insbesondere zwischen 4 - 8 Stunden, formulieren.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung bestehend aus einer ersten Komponente enthaltend
- mindestens ein Polyasparaginsäureester **P1** der Formel (I) 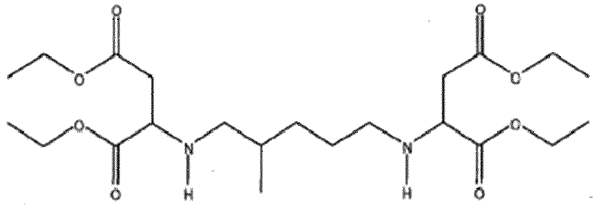 oder 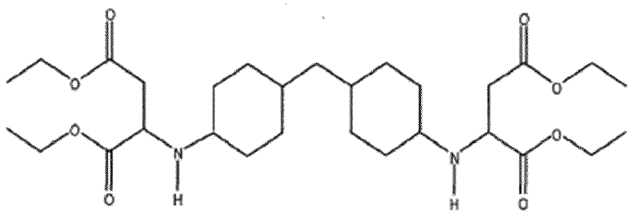 Formel (II) oder 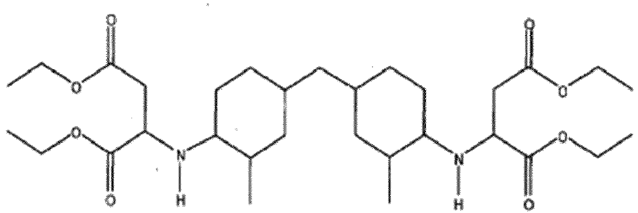 Formel (III);
   eine Mischung verschiedener Polyetherasparaginsäureester **P2** mit der folgenden Formel: 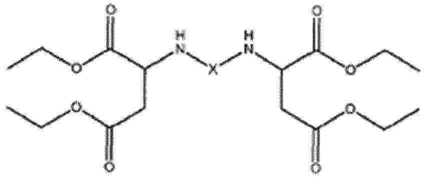 wobei X der Rest eines Polyetherpolyamins ist mit einer Wiederholungseinheit der Struktur 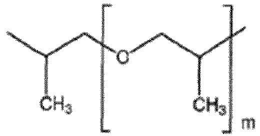
   wobei m = 2 bis 35, insbesondere m = 2 bis 6, insbesondere m = 2 bis 4 ist,
   und einer zweiten Komponente enthaltend ein aliphatisches Polyisocyanat **B1**;
   wobei der Polyasparaginsäureester **P1** und die Mischung verschiedener Polyetherasparaginsäureester **P2** in einer solchen Menge vorhanden sind, dass das Gewichtsverhältnis **P1/P2** im Bereich von 0.3 - 3 liegt.

Als "primäre Hydroxylgruppe" wird eine OH-Gruppe bezeichnet, welche an ein C-Atom mit zwei Wasserstoffen gebunden ist.
Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.
Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.
Als "Raumtemperatur" wird eine Temperatur von 23 °C bezeichnet.
Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Die Zusammensetzung weist in der ersten Komponente mindestens ein Polyasparaginsäureester **P1** der Formel (I) 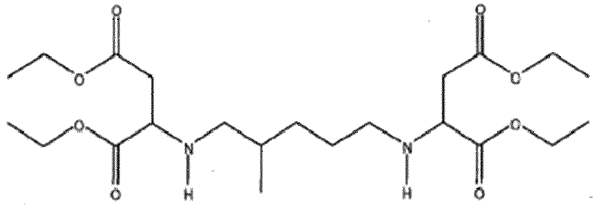 oder 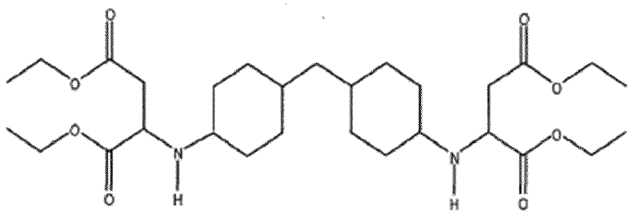 Formel (II) oder 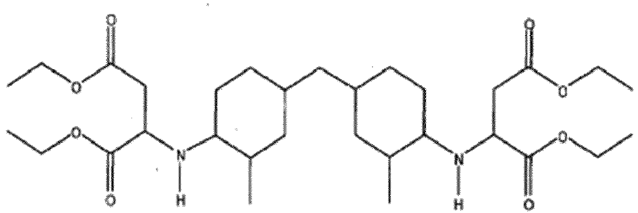 Formel (III) auf.

In einer bevorzugten Ausführungsform umfasst der Polyasparaginsäureester **P1** ein Reaktionsprodukt von zwei Äquivalenten Diethylmaleat mit einem Äquivalent 1,5-Diamin-2-methylpentan; 4,4'-Diaminodicyclohexylmethan; oder 3,3'-Dimethyl-4,4'-diaminodicyclohexylmethan. Diese Reaktionsprodukte können die in den Formeln (I) - (III) gezeigten Molekülstrukturen aufweisen.

In einer besonders bevorzugten Ausführungsform umfasst der Polyasparaginsäureester **P1** einen Polyasparaginsäureester wie in Formel (II) oder Formel (III) gezeigt.

Vorzugsweise weist der Polyasparaginsäureester **P1** ein Äquivalenzgewicht von 220 - 300, insbesondere 250 - 300, besonders bevorzugt von 270 - 295, auf.

Es ist weiter bevorzugt, wenn der Polyasparaginsäureester **P1** eine Viskosität bei 25 °C von 500 - 3,000 mPas, 600 - 2,500 mPas, insbesondere 700 - 2,200 mPas, gemäss DIN 53 019 aufweist, insbesondere gemessen mit einem Rheometer Physica MCR 301 Platte-Platte Rheometer mit einem Messspalt von 0,5 mm gemäss DIN 53 019-1.

Vorzugsweise weist der Polyasparaginsäureester **P1** eine Aminzahl von 160 - 250, insbesondere 170 - 220, besonders bevorzugt von 180 - 205, auf.

Geeignete Polyasparaginsäureester sind kommerziell von Covestro LLC, Pittsburgh, PA, USA, unter den Handelsnamen DESMOPHEN NH 1220, DESMOPHEN NH 1420, DESMOPHEN NH 1520 und DESMOPHEN NH 1521 erhältlich

Weiter kann es bevorzugt sein, wenn es sich bei dem Polyasparaginsäureester **P1** um ein Polyasparaginsäureester **P1-1** der Formel (III) handelt.

Weiter kann es auch bevorzugt sein, wenn es sich bei dem Polyasparaginsäureester **P1** um ein Polyasparaginsäureester **P1-2** der Formel (II) handelt.

Im Vergleich von den Beispielen E2 und E5 ist ersichtlich, dass bei der Verwendung von **P1-2** es zu einer leichten Erhöhung der Viskosität kommt, die Trocknungszeit jedoch stark verkürzt wird. Die Anforderungen an den Korrosionsschutz sind weiter erfüllt und die Lagerstabilität und Filmbildung nicht beeinträchtigt.

Besonders bevorzugt handelt es sich bei dem Polyasparaginsäureester **P1** um eine Mischung von Polyasparaginsäureestern **P1-1** und **P1-2.**

Vorzugsweise liegt das Gewichtsverhältnis **P1-1/P1-2** im Bereich von 1 -4, insbesondere 1.5 - 3.5, 2 - 3, besonders bevorzugt 2 - 2.5.

Überraschenderweise wurde gefunden, dass eine Mischung von **P1-1** mit **P1-2** in dem vorgenannten Gewichtsverhältnis zu einer starken Erniedrigung der Viskosität beiträgt. Weiter wurde überraschenderweise eine Erhöhung des Haftzugs nach ISO 4624 im Korrosionstest festgestellt und die Lagerstabilität und Filmbildung sind nicht beeinträchtigt. Dies ist beispielsweise im Vergleich von E6 mit E2 und E5 ersichtlich.

Die Zusammensetzung weist in der ersten Komponente eine Mischung verschiedener Polyetherasparaginsäureester **P2** mit der Formel 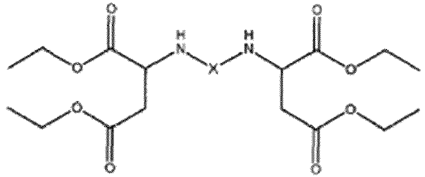 auf, wobei X der Rest eines Polyetherpolyamins ist mit einer Wiederholungseinheit der Struktur 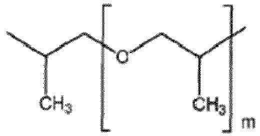 wobei m = 2 bis 35, insbesondere m = 2 bis 6, insbesondere m = 2 bis 4 ist.

Die Mischung von Polyetherasparaginsäureestern umfasst mindestens zwei verschiedene Polyetherasparaginsäureester, die eine unterschiedliche Anzahl von Wiederholungseinheiten in X aufweisen. In bevorzugten Ausführungsformen ist die Mischung so, dass m im Bereich von 2 bis 4 liegt. Solche Polyetherasparaginsäureester können durch Umsetzen einer Mischung von Polyetherpolyaminen mit einem Dialkylmaleat hergestellt werden. Solche Polyetherasparaginsäureester können zum Beispiel durch Einsatz der Reaktanten in solchen Mengen hergestellt werden, dass mindestens ein Äquivalent, vorzugsweise ein Äquivalent, olefinische Doppelbindungen für jedes Äquivalent primärer Aminogruppen vorhanden ist.
Geeignete Polyetherpolyamine, die mit Dialkylmaleamen in Michael-Additionsreaktionen umgesetzt werden können, sind beispielsweise die JEFFAMINE-Polyetheramine, die im Handel von Huntsman Corporation, The Woodlands, TX, erhältlich sind. In besonders bevorzugten Ausführungsformen umfasst die Mischung aus Polyetherpolyaminen eine Mischung aus Polyetherpolyaminen gemäß der Formel (IV) 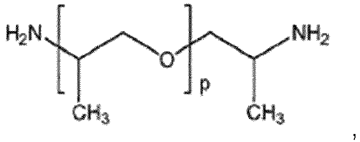 wobei p eine Zahl mit einem Wert von mindestens 2, insbesondere 2 bis 35, 2 bis 8, bevorzugt 2,5 bis 6.1, ist.

Vorzugsweise umfasst die Mischung verschiedener Polyetherasparaginsäureester **P2**: (1) mindestens 50 bis 99 Gew .-%, wie 50 bis 90 Gew .-% oder in einigen Fällen 80 bis 90 Gew .-% eines Polyetherpolyamins gemäß der Formel (IV) worin p einen Wert von 2,5 hat; und (2) 1 bis 50 Gew .-%, insbesondere 10 bis 50 Gew .-%, bevorzugt 10 bis 20 Gew .-%, eines Polyetherpolyamins gemäß der Formel (IV), worin p einen Wert von 6.1 hat.

Ein bevorzugtes Beispiel für eine geeignete Mischung aus Polyetherasparaginsäureestern **P2,** ist DESMOPHEN NH 2850 XP von Covestro Deutschland AG, Leverkusen, Deutschland, das ein Äquivalentgewicht von 290 aufweist, eine Viskosität bei 25 ° C von etwa 120 mPas sowie eine Aminzahl von etwa 195 mg KOH / g.

Im Vergleich von **P2** mit einem Polythiol (Ref.8) ist ersichtlich, dass die Verwendung eines Polythiol nicht zu einer Erniedrigung der Viskosität beiträgt und die Verwendung für eine ausreichende Lagerstabilität und Filmbildung nicht geeignet ist.
Im Vergleich von **P2** mit einem Aldimin (Ref.9) ist ersichtlich, dass die Verwendung eines Aldimins nicht zu einer Erniedrigung der Viskosität beiträgt und die Verwendung für eine ausreichende Lagerstabilität nicht geeignet ist.

Das Gewichtsverhältnis **P1/P2** liegt im Bereich von 0.3 - 3, insbesondere 0.4 - 2.5, vorzugsweise 0.5 - 2, 0.6 - 1.6, 0.75 - 1.3, 0.8 - 1.2, am meisten bevorzugt 0.9 - 1.1.
Dies ist insbesondere dahingehend von Vorteil, dass dadurch eine genügend tiefe Viskosität für eine spritzbare Zusammensetzung erhalten wird. Dies ist beispielsweise im Vergleich von Beispiel E3 mit Ref.7 ersichtlich.

Ein Gewichtsverhältnis von mehr als 3 ist dahingehend von Nachteil, dass dadurch zu hohe Viskositäten für eine spritzbare Zusammensetzung erhalten werden. Dies ist beispielsweise in den Vergleichsbeispielen Ref.4 - Ref.7 ersichtlich. Ein Gewichtsverhältnis von weniger als 0.3 ist dahingehend von Nachteil, dass dadurch die Anforderungen des Korrosionsschutzes nicht mehr gewährleistet werden können.

Weiter kann es vorteilhaft sein, wenn der mindestens eine Polyasparaginsäureester **P1** und die Mischung verschiedener Polyetherasparaginsäureester **P2** zusammen mehr als 80 Gewichts-%, vorzugsweise mehr als 90 Gewichts-%, insbesondere mehr als 95 Gewichts- %, insbesondere bevorzugt mehr als 98 Gewichts-%, am meisten bevorzugt mehr als 99 Gewichts-%, der NCO-reaktiven Gruppen, insbesondere der Amino-Gruppen, der ersten Komponente enthalten, bezogen auf das Gesamtgewicht der ersten Komponente.

Die zweite Komponente der Zusammensetzung enthält ein aliphatisches Polyisocyanat **B1**.

Als "aliphatisches Isocyanat" wird ein Isocyanat bezeichnet, dessen Isocyanatgruppen direkt an ein aliphatisches C-Atom gebunden sind. Dementsprechend werden solche Isocyanatgruppen als "aliphatische Isocyanatgruppen" bezeichnet.

Geeignete aliphatische Polyisocyanate **B1** sind insbesondere monomere Di- oder Triisocyanaten, sowie Oligomere, Polymere und Derivate von monomeren Di- oder Triisocyanate, sowie beliebige Mischungen davon.

Als aliphatische monomere Polyisocyanate **B1** bevorzugt sind aliphatische oder cycloaliphatische Diisocyanate, insbesondere HDI, TMDI, Cyclohexan-1,3- oder -1,4-diisocyanat, IPDI, H₁₂MDI, 1,3- oder 1,4-Bis-(isocyanatomethyl)cyclohexan und XDI.

Ein besonders bevorzugtes monomeres Polyisocyanat **B1** ist HDI, IPDI oder H₁₂MDI. Am meisten bevorzugt ist HDI oder IPDI, insbesondere HDI.

Geeignete Oligomere, Polymere und Derivate der genannten monomeren Di- und Triisocyanate sind insbesondere abgeleitet von HDI oder IPDI, insbesondere HDI. Davon insbesondere geeignet sind kommerziell erhältliche Typen, beispielsweise Desmodur® N 75, Desmodur® N 3600 und Desmodur® N 3900 (alle von Bayer).
Vorzugsweise weisen sie einen NCO-Gehalt von 16 bis 25 Gewichts-% auf, vorzugsweise 20 bis 25 Gewichts-%.

Vorzugsweise weisen sie eine Viskosität bei 23 °C von 500 - 2000 mPa·s, bevorzugt 700 - 1500 mPa·s, insbesondere 1000 - 1500 mPa·s, gemäss DIN EN ISO 3219/A.3, auf.

Als aliphatische Polyisocyanate **B1** besonders bevorzugt sind Oligomere, Polymere und Derivate abgeleitet von HDI oder IPDI, insbesondere HDI. Vorzugsweise weisen sie einen NCO-Gehalt von 16 bis 25 Gewichts-% auf, insbesondere 20 bis 25 Gewichts-%.

Die zweite Komponente der Zusammensetzung enthält vorzugsweise zusätzlich ein aliphatisches Diisocyanat **B2** der Formel (V) OCN-(CH2)ₓ-G-(CH2)_{y}-NCO, wobei x und y unabhängig voneinander für einen Wert von 4-10, insbesondere 4-8, stehen und G eine Allophanat-Gruppe ist.

Wie dem Fachmann bekannt ist, weist eine Allophanat-Gruppe folgende chemische Struktur auf:

-N(CO-OR)-C(O)-N(H)-,

wobei R ein organischer Rest, insbesondere eine C1-C20-Alkyl-Gruppe, ist.
In einer bevorzugten Ausführungsform ist x=y=6. Das aliphatisches Diisocyanat **B2** weist dann folgende chemische Struktur auf:

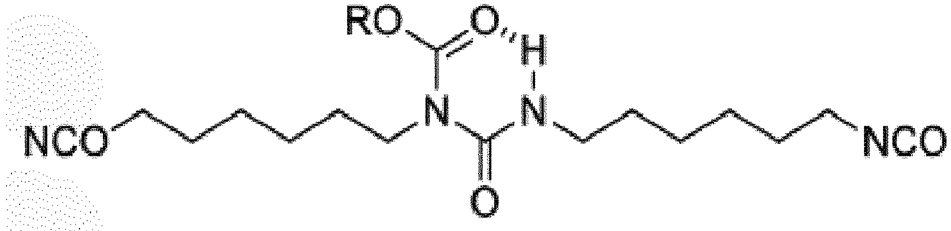

Bevorzugt ist der Rest R in der Allophanat-Gruppe eine C1-C20-Alkyl-Gruppe, insbesondere eine C10-C20-Alkyl-Gruppe, die substituiert oder unsubstituiert sein kann und vorzugsweise alkoxyliert ist.
Eine solche alkoxylierte Alkyl-Gruppe weist bevorzugt die folgende Struktur auf:

-(CH2-CH2-O)ₐ-R₂

wobei R₂ eine substituierte oder unsubstituierte C1-C20-Alkyl-Gruppe, bevorzugter eine substituierte oder unsubstituierte C10-C20-Alkyl-Gruppe ist und a=1-10, bevorzugter 1-5, insbesondere 2-4 ist.
Ein kommerziell erhältliches aliphatisches Diisocyanat mit einer Allophanat-Gruppe ist beispielsweise Tolonate® X FLO 100 von Vencorex. In diesem Diisocyanat mit Allophanat-Gruppe ist x=y=6, d.h. zwischen der terminalen Isocyanat-Gruppe und der Allophanat-Gruppe liegt jeweils eine Hexamethylengruppe -(CH2)₆- vor.

Im Vergleich der Beispiele E1 und E2 mit E3 und E4 ist ersichtlich, dass die zusätzliche Verwendung von **B2** zu einer weiteren Erniedrigung der Viskosität beiträgt, die Anforderungen an den Korrosionsschutz weiter erfüllt sind und die Lagerstabilität und Filmbildung nicht beeinträchtigt werden.

Es ist weiter vorteilhaft, wenn die Summe der NCO-Gruppen, welche nicht von **B1** und **B2** herrühren, ≤20%, insbesondere ≤10%, insbesondere bevorzugt ≤5%, am meisten bevorzugt ≤1%, beträgt, bezogen auf die Summe aller NCO - Gruppen der zweikomponentigen Polyureazusammensetzung.

Vorzugsweise beträgt der Anteil der aliphatischen Polyisocyanate **B1** und **B2** ≥ 90 Gew.-%, insbesondere ≥ 95 Gew.-%, insbesondere bevorzugt ≥99 Gew.-%, bezogen auf das Gesamtgewicht der zweiten Komponente.

Die Zusammensetzung umfasst vorzugsweise weiter mindestens ein Korrosionsschutzpigment **KP.** Bei diesem mindestens einen Korrosionsschutzpigment **KP** handelt es sich um mindestens ein plättchenförmiges Korrosionsschutzpigment **KPP** und/oder mindestens ein aktives Korrosionsschutzpigment **KPA.**

Umfasst die Zusammensetzung ein plättchenförmiges Korrosionsschutzpigment **KPP,** ist dieses insbesondere ausgewählt aus der Liste bestehend aus Glass-Flakes, Eisenglimmer, Glimmer, Zink, Aluminium und Schichtsilikaten, insbesondere Talk und Kaolinit. Besonders bevorzugt handelt es sich um Glass-Flakes.

Die plättchenförmigen Korrosionsschutzpigmente haben vorzugsweise einen mittleren Durchmesser D₅₀ mit einem Bereich von 4 bis 35 µm, weiter bevorzugt von 4,5 bis 30 µm, noch weiter bevorzugt von 5 bis 25 µm.
Der D₅₀-Wert der Summenhäufigkeitsverteilung der Korrosionsschutzpigmente, wie sie durch Laserbeugungsmethoden erhalten wird, gibt an, dass 50% der Korrosionsschutzpigmente einen Durchmesser aufweisen, der gleich oder kleiner als der jeweils angegebene Wert ist. Die Größenverteilungskurve kann durch Laserdiffraktometrie bestimmt werden.

Für den Korrosionsschutz ist die Verwendung von plättchenförmigen Pigmenten von Vorteil, da plättchenförmige Pigmente im Unterschied zu Pigmenten mit sphärischen oder irregulären Geometrien eine Barrierewirkung nach Aufbringung auf dem gegen Korrosion zu schützenden Gegenstand aufweisen.

Vorzugsweise handelt es sich um plättchenförmigen Korrosionsschutzpigmente wie sie beschrieben sind unter dem Begriff "Korrosionschutzpigmente" in Römpp Chemie Lexikon, online-Version, Georg Thieme Verlag, abgerufen am 04 November 2018.

Vorzugsweise beträgt der Anteil an plättchenförmigen Korrosionsschutzpigmenten **KPP** 5 - 20 Gew.-%, insbesondere 10 - 15 Gew- %, bezogen auf das Gesamtgewicht der Zusammensetzung.

Umfasst die Zusammensetzung ein aktives Korrosionsschutzpigment **KPA,** ist dieses insbesondere ausgewählt aus der Liste bestehend aus Zinkstaub, Zinkoxid und Zinkphosphat. Besonders bevorzugt handelt es sich um Zinkphosphat.

Vorzugsweise handelt es sich um aktives Korrosionsschutzpigment wie sie beschrieben sind unter dem Begriff "Korrosionschutzpigmente" in Römpp Chemie Lexikon, online-Version, Georg Thieme Verlag, abgerufen am 04 November 2018.

Vorzugsweise beträgt der Anteil an aktivem Korrosionsschutzpigment **KPA** 2 - 20 Gew.-%, 4 - 15 Gew.-%, insbesondere 5 - 10 Gew.-%, bezogen auf das Gesamtgewicht der Zusammensetzung.

Besonders bevorzugt enthält die Zusammensetzung sowohl mindestens ein plättchenförmiges Korrosionsschutzpigment **KPP** als auch mindestens ein aktives Korrosionsschutzpigment **KPA.**

Bevorzugt enthält die Zusammensetzung zusätzlich Füllstoffe. Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Vorzugsweise beträgt der Anteil an Füllstoffen 15 - 45 Gew.-%, 25 - 45 Gew.- %, insbesondere 30 - 40 Gew.-%, bezogen auf das Gesamtgewicht der Zusammensetzung.

Vorzugsweise weist die Zusammensetzung weniger als 5 Gew.-%, weniger als 2 Gew.-%, weniger als 1 Gew.-%, weniger als 0.5 Gew.-%, insbesondere weniger als 0.1 Gew-% Lösungsmittel auf, bezogen auf das Gesamtgewicht der Zusammensetzung.
Solche Lösemittel sind insbesondere Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Acetale wie insbesondere Methylal, Ethylal, Propylal, Butylal, 2-Ethylhexylal, Dioxolan, Glycerolformal oder 2,5,7,10-Tetraoxaundecan (TOU), sowie Toluol, Xylol, Heptan, Octan, Naphtha, White Spirit, Petrolether oder Benzin, insbesondere Solvesso™-Typen (von Exxon), weiterhin Methylenchlorid, Propylencarbonat, Butyrolacton, N-Methylpyrrolidon oder N-Ethylpyrrolidon.
Dies ist aufgrund des Umwelt- und Gesundheitsschutzes vorteilhaft, da die Zusammensetzungen dadurch geringe VOC-Emissionen aufweisen. Es wurde überraschenderweise gefunden, dass die vorliegende Erfindung ohne die vorgehend beschriebenen Lösungsmittel eine tiefe Viskosität erreicht.

Die Zusammensetzung kann weitere für Polyureazusammensetzungen gebräuchliche Zusätze enthalten. Insbesondere können die folgenden Hilfs- und Zusatzstoffe vorhanden sein:
- anorganische oder organische Pigmente, insbesondere Titandioxid, Chromoxide oder Eisenoxide;
- Rheologie-Modifizier;
- Additive, insbesondere Netzmittel, Verlaufmittel, Entschäumer, Entlüfter, Stabilisatoren gegen Oxidation, Wärme, Licht oder UV-Strahlung oder Biozide;
oder weitere üblicherweise in solchen Zusammensetzungen eingesetzte Substanzen.

Das Verhältnis der Isocyanatgruppen gegenüber den zu Isocyanatgruppen reaktiven Gruppen, insbesondere Aminogruppen, liegt vorzugsweise im Bereich von 0.8 bis 1.2, bevorzugt im Bereich von 0.9 bis 1.1, besonders bevorzugt im Bereich von 0.95 bis 1.05.

Die erste Komponente der Zusammensetzung weist bevorzugt eine Viskosität bei 23 °C im Bereich von 1 bis 10 Pa·s, 2 bis 9 Pa·s, 3 bis 8 Pa·s, bevorzugt 4 bis 6 Pa·s, auf, insbesondere gemessen mit einem Rheometer Physica MCR 301 Platte-Platte Rheometer mit einem Messspalt von 0,5 mm gemäss DIN 53 019-1.

Vorzugsweise weist die Zusammensetzung unmittelbar nach dem Mischen der beiden Komponenten, insbesondere für 30 Sekunden bei 2000 Umdrehungen/min, gemessen mit einem Physica MCR 301 Platte-Platte Rheometer bei 20°C, mit einem Messspalt von 0,5 mm gemäss DIN 53019-1 und bei einer Scherrate von 343 Umdrehungen/min, eine Viskosität von 1000 - 7000 mPas, vorzugsweise 2000 - 5000 mPas, insbesondere 3000 - 4000 mPas, auf.

Die erste und die zweite Komponente der Zusammensetzung werden getrennt voneinander hergestellt. Dabei werden die Bestandteile der jeweiligen Komponente unter Ausschluss von Feuchtigkeit miteinander vermischt, so dass eine makroskopisch homogene Flüssigkeit entsteht. Jede Komponente wird in einem separaten feuchtigkeitsdichten Gebinde gelagert. Ein geeignetes Gebinde ist insbesondere ein Fass, ein Container, ein Hobbock, ein Eimer, eine Büchse, ein Beutel, ein Kanister oder eine Flasche.
Zur Anwendung der Zusammensetzung werden die beiden Komponenten kurz vor oder während der Applikation miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen, wie vorgängig beschrieben. In Gewichtsteilen liegt das Mischungsverhältnis zwischen der ersten und der zweiten Komponente typischerweise im Bereich von etwa 1:1 bis 20:1, insbesondere 2:1 bis 10:1.
Das Vermischen der beiden Komponenten erfolgt mittels eines geeigneten Rührwerkes, beispielsweise eines Doppelwellenmischers, wobei die einzelnen Komponenten geeigneterweise im richtigen Mischungsverhältnis vorkonfektioniert sind. Ebenfalls möglich ist eine koninuierliche maschinelle Verarbeitung mittels einer Zweikomponenten-Dosieranlage mit statischer oder dynamischer Vermischung der Komponenten. Beim Mischen ist darauf zu achten, dass die zwei Komponenten möglichst homogen vermischt werden. Wird vor der Applikation vermischt, so muss darauf geachtet werden, dass zwischen dem Vermischen der Komponenten und der Applikation nicht zu viel Zeit vergeht, da es dadurch zu Störungen, wie beispielsweise einem schlechten Verlauf oder einem verlangsamten oder unvollständigen Aufbau der Haftung zum Substrat, kommen kann. Das Vermischen erfolgt insbesondere bei Umgebungstemperatur, welche typischerweise im Bereich von etwa 5 bis 50 °C, bevorzugt bei etwa 10 bis 35 °C, liegt.
Mit dem Vermischen der beiden Komponenten beginnt die Aushärtung durch chemische Reaktion. Dabei reagieren vorhandene NCO-reaktive Gruppen, insbesondere Aminogruppen, mit vorhandenen Isocyanatgruppen. Als Resultat dieser Reaktionen härtet die Zusammensetzung zu einem festen Material aus. Dieser Vorgang wird auch als Vernetzung bezeichnet.

Weiterhin betrifft die Erfindung eine ausgehärtete Zusammensetzung, erhalten aus einer Zusammensetzung, wie sie vorhergehend beschrieben worden ist, nach dem Vermischen der beiden Komponenten und deren Aushärtung.

Bei der Applikation kann die frisch vermischte, noch flüssige Zusammensetzung als Beschichtung auf eine Fläche appliziert werden. Vorzugsweise wird die Zusammensetzung durch Spritzen appliziert, vorzugsweise mit einem Spritzdruck von mehr als 50 bar, insbesondere mehr als 100 bar. Sie kann jedoch auch appliziert werden, indem sie auf ein Substrat gegossen und anschliessend flächig bis zur erwünschten Schichtdicke verteilt wird, beispielsweise mittels einer Rolle, einer Bürste oder einem Pinsel.

In einem weiteren Aspekt betrifft die vorliegende Erfindung ein Verfahren zur Applikation der vorgehend genannten gemischten Zusammensetzung als Beschichtung auf ein Substrat. Vorzugsweise handelt es sich um die nachfolgend als bevorzugt aufgeführte Substrate

Vorzugsweise wird dabei eine Beschichtung mit einer Gesamtschichtdicke im Bereich von 50 bis 800 µm, 200 bis 700 µm, 300 bis 700 µm, insbesondere 400 bis 600 µm, erhalten.

Vorzugsweise wird die Zusammensetzung nicht auf einen Epoxidharz-basierten Primer aufgebracht sondern direkt auf das zu schützende Substrat. Ein solcher Primer wird üblicherweise so appliziert, dass nach dem Applizieren eine Primerschicht in einer Schichtdicke im Bereich von 80 bis 500 µm, insbesondere 100 bis 300 µm, auf dem Substrat verbleibt. Er wird typischerweise dazu verwendet, die Haftung zwischen einem Substrat und einer Schutzbeschichtung zu verbessern. Überraschenderweise wurde gefunden, dass die erfindungsgemässe Zusammensetzung für eine ausreichende Haftung und eine gute Korrosionsbeständigkeit keine Primer benötigt.

Geeignete Substrate, welche mit der Zusammensetzung beschichtet werden können, sind insbesondere Metalle oder Legierungen wie Aluminium, Kupfer, Eisen, Stahl, Buntmetalle, inklusive oberflächenveredelte Metalle oder Legierungen wie verzinkte oder verchromte Metalle. Besonders bevorzugt handelt es sich um Stahl.
Vorzugsweise handelt es sich bei den vorgenannten Metallen oder Legierungen um atmosphärisch belastete Substrate.
Unter dem Begriff "atmosphärisch belastet" werden vorzugsweise Objekte verstanden, welche durch Luftverunreinigungen und die Witterung belastet werden.

Vorzugsweise handelt es sich bei den vorgehend erwähnten Substraten um Objekten ausgewählt aus der Liste bestehend aus Brücken, Rohrleitungen, Industrie- und Hafenanlagen, Tanks, Windkraftanlagen und Kläranlagen, insbesondere Windkraftanlagen.

Die Substrate können bei Bedarf vor dem Applizieren vorbehandelt werden, insbesondere durch physikalische und/oder chemische Reinigungsverfahren.

Besonders bevorzugt weisen die vorgehend genannten Substrate keinen Primer auf ihrer Oberfläche auf, insbesondere keinen vorgehend genannten Epoxidharz-basierten Primer.

In einem weiteren Aspekt der Erfindung handelt es sich daher um die Verwendung der erfindungsgemässen Zusammensetzung als Beschichtung, insbesondere zum Schutz der vorgehend genannten Substrate und Objekte gegen Korrosion.

Vorzugsweise handelt es sich um eine Verwendung in einem Beschichtungssystem, umfassend
- vorzugsweise keinen Primer, insbesondere keinen Epoxidharz-basierten Primer, und
- mindestens eine Schicht der vorgehend beschriebenen Zusammensetzung.

Weiter ist es vorteilhaft, wenn die Zusammensetzung eine Gesamtschichtdicke im Bereich von 150 bis 800 µm, 200 bis 700 µm, 300 bis 700 µm, insbesondere 400 bis 600 µm, aufweist.

Aus dem vorgehend genannten Verfahren oder aus der Applikation und Aushärtung der Zusammensetzung wird ein Artikel erhalten. In einem weiteren Aspekt betrifft die vorliegende Erfindung einen solchen Artikel. Vorzugsweise handelt es sich um ein vorgehend genanntes Objekt ausgewählt aus der Liste bestehend aus Brücken, Rohrleitungen, Industrie- und Hafenanlagen, Tanks, Windkraftanlagen und Kläranlagen, insbesondere Windkraftanlagen.

Die erfindungsgemässe Zusammensetzung weist vorteilhafte Eigenschaften auf:
Haftzug gemäss EN DIN ISO 4624; 5 - 15 MPa,
Unterrostung am Ritz gemäss EN DIN ISO 12944, 0 - 6, vorzugsweise 0 - 4, insbesondere 0 - 2,
Blasenbildung gemäss EN DIN ISO 4628-2/ Rostbildung gemäss EN DIN ISO 4628-3; 0,
Trockengrad (wie im Beispielteil beschrieben); < 20 h, vorzugsweise ≤ 15 h, insbesondere 8 - 3 h, besonders bevorzugt 4 - 6 h.
Shore D (wie im Beispielteil beschrieben); >50, >60, insbesondere 70 - 90.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. Verwendete kommerzielle Substanzen:

| | |
|---|---|
| P1-1 | Desmophen NH 1520, Amino-funktioneller Polyasparaginsäureester, Aminwert 189 - 193 mg KOH/g, Äquivalenzgewicht 290, Viskosität bei 25 °C 800 - 2,000 mPas nach DIN 53 019 (von Bayer Materials Science) |
| P1-2 | Desmophen NH 1420, Amino-funktioneller Polyasparaginsäureester, Aminwert 199 - 203 mg KOH/g, Äquivalenzgewicht 276, Viskosität bei 25 °C 900 - 2,000 mPas nach DIN 53 019 (von Bayer Materials Science) |
| P1-3 | Desmophen NH 1220, Amino-funktioneller Polyasparaginsäureester, Aminwert 240 - 248 mg KOH/g, Äquivalenzgewicht 234, Viskosität bei 25 °C ≤ 100 mPas nach DIN 53 019 (von Bayer Materials Science) |
| P2 | Desmophen NH 2850 XP, Mischung aus Aminofunktionellen Polyasparaginsäureestern, Aminwert 190 mg KOH/g, Äquivalenzgewicht 295, Viskosität bei 25 °C 100 mPas nach DIN 53 019 (von Bayer Materials Science) |
| Polythiol | Polythiol auf Basis Mercaptopropionat |
| Aldimin | Blockiertes Diamin, latenter Härter |
| Thixo 1 | Thixatrol® ST, organisch modifiziertes Rizinusölderivat, (Elementis) |
| TiO2 | Farbpigment, Titandioxid |
| Füller | Talk |
| Molekularsieb | Molekularsieb |
| KPA | Zinkphosphatpulver |
| KPP | Glass-Flakes (von Microglass) |
| Thixo 2 | Pyrogene Kieselsäure |
| B1-1 | Desmodur® N 3600, Trimer von Hexamethylen Diisocyanat (HDI); NCO-Gehalt 22.5 - 23.5 Gewichts-% (von Bayer MaterialScience) |
| B1-2 | Desmodur® N 3900, Trimer von Hexamethylen Diisocyanate(HDI); NCO-Gehalt 22 - 23 Gewichts-% (von Bayer MaterialScience) |
| B2 | Tolonate X FLO 100, aliphatisches Diisocyanat mit Allophanat-Gruppe; NCO-Gehalt 11.3 - 13.3 Gewichts- %, Viskosität 60 - 220 mPa.s (von Vencorex) |

### 2. Herstellung der Polyurea-Zusammensetzungen

Für jede Zusammensetzung wurden die in den Tabellen 1 und 2 angegebenen Inhaltsstoffe in den angegebenen Mengen (in Gewichtsteilen) der ersten Komponente ("Komponente 1") zu einer homogenen Flüssigkeit verarbeitet und aufbewahrt. Anschliessend wurde die in den Tabellen 1 und 2 angegebenen Menge der zweiten Komponente zur ersten Komponente gegeben und die beiden Komponenten für 30 Sekunden bei 2000 Umdrehungen/s im Speedmixer gemischt diese unverzüglich folgendermassen geprüft:
Die **Viskosität** wurde mit einem Rheometer Physica MCR 301 Platte-Platte Rheometer bei 20°C, mit einem Messspalt von 0,5 mm gemäss DIN 53019-1 gemessen. Die Viskosität wurde bei einer Scherrate von 343 U/min bestimmt ("Viskosität bei Scherrate 343").

Für den **Korrosionsschutztest** nach dem Offshore Test DIN EN ISO 12944 Teil 9 wurden Probenkörper folgendermassen hergestellt:
Als Substrate wurden Stahlplatten mit Oberflächenvorbereitung Sa 2 ½ und einer Rauhtiefe von 50-70 µm verwendet.
Danach wurden folgende Tests durchgeführt:
- Haftzug-Messung gemäss DIN EN ISO 4624,
- Unterrostung am Ritz gemäss DIN EN ISO 12944,
- Blasenbildung (DIN EN ISO 4628-2)/ Rostbildung (DIN EN ISO 4628-3).

Der **Trockengrad** TG 6 bei 80µm TFD RT wurde gemäss DIN EN ISO 9117-5 bei 23°C und 50 % rel. Luftfeuchte bestimmt.
Die **Shore D** Härte wurde gemäss DIN 53505 geprüft. Die Probenkörper hatten eine Höhe von 5 mm und einen Durchmesser von 5,5 cm und wurden für eine Woche bei Normklima gelagert. Die Messung wurde nach 24 Stunden erneut gemessen und die Messung so lang wiederholt bis der Härtewert konstant blieb.
Die **Lagerstabilität** wurde folgendermassen bewertet:
- gut; kein Absetzungen in der Zusammensetzung
- mässig; wenige Absetzungen in der Zusammensetzung, durch kurzzeitiges Aufrühren verschwinden Absetzungen.
- schlecht; viele Absetzungen/Ausflockungen in der Zusammensetzung, auch durch längeres Aufrühren verschwinden erwähnte Absetzungen nicht.
Die **Filmbildung** wurde folgendermassen bewertet:
- gut; klare, glänzende Filme, keine Oberflächenstörungen
- mässig; milchige/trübe Filme, keine Oberflächenstörungen
- schlecht; Filme mit Oberflächenstörungen wie Schmierenbildung/Abscheidungen/Zellbildung.

Die Resultate sind in den Tabellen 1 bis 2 angegeben.
Das Verhältnis der Isocyanatgruppen gegenüber den Amino-gruppen ist als "NCO/NH" ausgewiesen.

Bei den Zusammensetzungen ***E1*** bis ***E6*** handelt es sich um erfindungsgemässe Beispiele. Bei den Zusammensetzungen ***Ref.1*** bis ***Ref.9*** handelt es sich um Vergleichsbeispiele.

**Tabelle 1**

| Komponente 1 | **Ref.1** | **Ref.2** | **Ref.3** | **Ref.4** | **Ref.5** | **Ref.6** | **Ref.7** |
|---|---|---|---|---|---|---|---|
| P1-1 | 45 | 0 | 0 | 9 | 19 | 30 | 34 |
| P1-2 | 0 | 45 | 0 | 35 | 25 | 8 | 0 |
| P1-3 | 0 | 0 | 45 | 0 | 0 | 0 | 0 |
| P2 | 0 | 0 | 0 | 0 | 0 | 0 | 5 |
| Polythiol | 0 | 0 | 0 | 0 | 0 | 0 | 0 |
| Aldimin | 0 | 0 | 0 | 0 | 0 | 0 | 0 |
| Thixo 1 | 1 | 1 | 1 | 1 | 1 | 1 | 1 |
| TiO₂ | 6.3 | 6.3 | 6.3 | 6.3 | 6.3 | 6.3 | 6.3 |
| Füller | 25.5 | 25.5 | 25.5 | 25.5 | 25.5 | 25.5 | 25.5 |
| Molekularsieb | 5 | 5 | 5 | 5 | 5 | 5 | 5 |
| KPA | 7.9 | 7.9 | 7.9 | 7.9 | 7.9 | 7.9 | 7.9 |
| KPP | 14.8 | 14.8 | 14.8 | 14.8 | 14.8 | 14.8 | 14.8 |
| Thixo 2 | 0.5 | 0.5 | 0.5 | 0.5 | 0.5 | 0.5 | 0.5 |
| Summe | 106 | 106 | 106 | 105 | 105 | 99 | 100 |
| P1/P2 | | | | | | | |
| P1-1/P1-2 | | | | | | | |

| Komponente 2 | | | | | | | |
|---|---|---|---|---|---|---|---|
| B1-1 | 26 | 26 | 26 | 26 | 26 | 26 | 25 |
| B1-2 | 0 | 0 | 0 | 0 | 0 | 0 | 0 |
| B2 | 0 | 0 | 0 | 0 | 0 | 0 | 0 |
| NCO:NH | 1:1 | 1:1 | 1:1 | 1:1 | 1:1 | 1:1 | 1:1 |
| Nach Korrosionstest ISO 12944 Teil 9 | | | | | | | |
| Haftzug ISO 4624 | 12 | 12 | 12 | n.b. | n.b. | n.b. | n.b. |
| Unterrostung am Ritz ISO 12944 | 2 | 2 | 2 | n.b. | n.b. | n.b. | n.b. |
| Blasenbildung (ISO 4628-2)/Rostbildung (ISO 4628-3) | 0 | 0 | 0 | n.b. | n.b. | n.b. | n.b. |
| Viskosität bei Scherrate 343 | 15576 | 15576 | 15576 | 10311 | 7901 | 14768 | 14359 |
| Trockengrad | 8 h | 4-6 h | <1 h | n.b. | n.b. | n.b. | n.b. |
| Shore D | 80 | 80 | 80 | n.b. | n.b. | n.b. | n.b. |
| Lagerstabilität | gut | gut | gut | n.b. | n.b. | n.b. | n.b. |
| Filmbildung | gut | gut | gut | gut | gut | gut | gut |

**Tabelle 2**

| Komponente 1 | **Ref.8** | **Ref.9** | **E1** | **E2** | **E3** | **E4** | **E5** | **E6** |
|---|---|---|---|---|---|---|---|---|
| P1-1 | 31.34 | 0 | 20 | 20 | 20 | 20 | | 14 |
| P1-2 | 8 | 30 | | | | | 20 | 6 |
| P1-3 | | | | | | | | |
| P2 | | | 19.3 | 19.3 | 19.3 | 19.3 | 19.3 | 19.3 |
| Polythiol | 2 | | | | | | | |
| Aldimin | | 9.3 | 4.4 | 4.4 | 4.4 | 4.4 | 4.4 | 4.4 |
| Thixo 1 | 1 | 1 | 1 | 1 | 1 | 1 | 1 | 1 |
| TiO2 | 6.3 | 6.3 | 6.3 | 6.3 | 6.3 | 6.3 | 6.3 | 6.3 |
| Füller | 25.5 | 25.5 | 25.5 | 25.5 | 25.5 | 25.5 | 25.5 | 25.5 |
| Molekularsieb | 5 | 5 | 5 | 5 | 5 | 5 | 5 | 5 |
| KPA | 7.9 | 7.9 | 7.9 | 7.9 | 7.9 | 7.9 | 7.9 | 7.9 |
| KPP | 14.8 | 14.8 | 14.8 | 14.8 | 14.8 | 14.8 | 14.8 | 14.8 |
| Thixo 2 | 0.5 | 0.5 | 0.5 | 0.5 | 0.5 | 0.5 | 0.5 | 0.5 |
| Summe | 102.34 | 100.3 | 104.7 | 104.7 | 104.7 | 104.7 | 104.7 | 104.7 |
| P1/P2 | | | | | | | | |
| P1-1/P1-2 | | | | | | | | |

| Komponente 2 | | | | | | | | |
|---|---|---|---|---|---|---|---|---|
| B1-1 | 28 | 32 | 21.6 | | 24.5 | | | |
| B1-2 | | | | 21.2 | | 24 | 21.2 | 21.2 |
| B2 | | | 5.4 | 5.3 | | | 5.3 | 5.3 |
| NCO:NH | 1:1 | 1:1 | 1:1 | 1:1 | 1:1 | 1:1 | 1:1 | 1:1 |
| Nach Korrosionstest ISO 12944 Teil 9 | | | | | | | | |
| Haftzug ISO 4624 | n.b. | n.b. | 9 | 9 | 10 | 10 | n.b. | 12 |
| Unterrostung am Ritz ISO 12944 | n.b. | n.b. | 2 | 2 | 2 | 2 | n.b. | 2 |
| Blasenbildung (ISO 4628-2)/ Rostbildung (ISO 4628-3) | n.b. | n.b. | 0 | 0 | 0 | 0 | n.b. | 0 |
| Viskosität bei Scherrate 343 (mPas) | 20650 | 13613 | 5138 | 4426 | 6462 | 5149 | 5012 | 4000 |
| Trockengrad | <1 h | 2 h | 18,5 h | 18,5 h | 14 h | 14 h | 4 h | 8 h |
| Shore D | 80 | 80 | 77 | 78 | 80 | 79 | 76 | 74 |
| Lagerstabilität | schlecht | mässig | gut | gut | gut | gut | gut | gut |
| Filmbildung | schlecht | gut | gut | gut | gut | gut | gut | gut |

## Patentansprüche

1. Zusammensetzung bestehend aus
einer ersten Komponente enthaltend:
mindestens ein Polyasparaginsäureester **P1** der Formel (I) 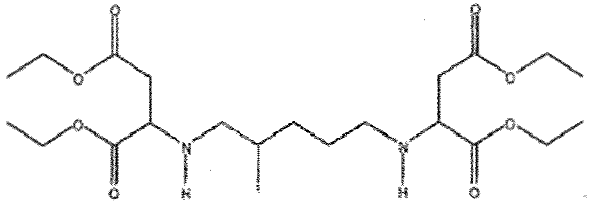 oder 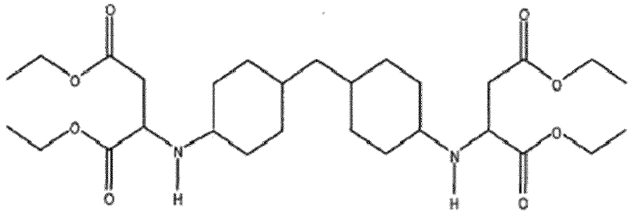 Formel (II) oder 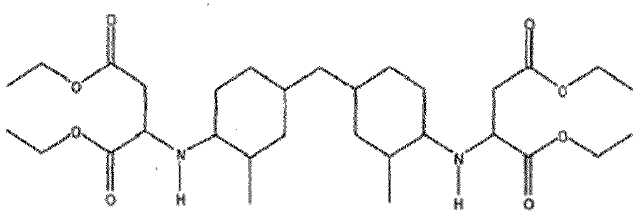 Formel (III);
eine Mischung verschiedener Polyetherasparaginsäureester **P2** mit der folgenden Formel: 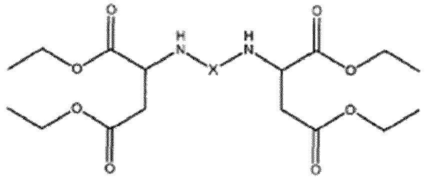 wobei X der Rest eines Polyetherpolyamins ist mit einer Wiederholungseinheit der Struktur 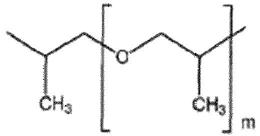 wobei m = 2 bis 35, insbesondere m = 2 bis 6, insbesondere m = 2 bis 4 ist,
und einer zweiten Komponente enthaltend ein aliphatisches Polyisocyanat **B1;**
wobei der Polyasparaginsäureester **P1** und die Mischung verschiedener Polyetherasparaginsäureester **P2** in einer solchen Menge vorhanden sind, dass das Gewichtsverhältnis **P1/P2** im Bereich von 0.3 - 3 liegt.

2. Zusammensetzung gemäss Anspruch 1, **dadurch gekennzeichnet, dass** es sich bei dem Polyasparaginsäureester **P1** um einen Polyasparaginsäureester der Formel (II) oder Formel (III) handelt.

3. Zusammensetzung gemäss einem der vorhergehenden Ansprüche, **dadurch gekennzeichnet, dass** der Polyasparaginsäureester **P1** ein Äquivalenzgewicht von 220 - 300, insbesondere 250 - 300, besonders bevorzugt von 270 - 295, aufweist.

4. Zusammensetzung gemäss einem der vorhergehenden Ansprüche, **dadurch gekennzeichnet, dass** es sich bei dem Polyasparaginsäureester **P1** um eine Mischung von Polyasparaginsäureestern **P1-1** und **P1-2** handelt, wobei der Polyasparaginsäureester **P1-1** die Formel (III) aufweist; und der Polyasparaginsäureester **P1-2** die Formel (II) aufweist.

5. Zusammensetzung gemäss Anspruch 4, **dadurch gekennzeichnet, dass** das das Gewichtsverhältnis **P1-1/P1-2** im Bereich von 1 - 4, insbesondere 1.5 - 3.5, 2 - 3, besonders bevorzugt 2 - 2.5, liegt.

6. Zusammensetzung gemäss einem der vorhergehenden Ansprüche, **dadurch gekennzeichnet, dass** die Mischung aus Polyetherpolyaminen eine Mischung aus Polyetherpolyaminen gemäß der Formel (IV) 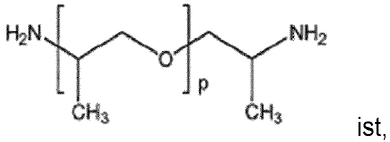 wobei p eine Zahl mit einem Wert von mindestens 2, insbesondere 2 bis 35, 2 bis 8, bevorzugt 2,5 bis 6.1, darstellt.

7. Zusammensetzung gemäss einem der vorhergehenden Ansprüche, **dadurch gekennzeichnet, dass** das Gewichtsverhältnis **P1/P2** im Bereich von 0.6 - 1.6, 0.75 - 1.3, 0.8 - 1.2, am meisten bevorzugt 0.9 - 1.1, liegt.

8. Zusammensetzung gemäss einem der vorhergehenden Ansprüche, **dadurch gekennzeichnet, dass** das aliphatische Polyisocyanat **B1** ein Oligomer, Polymer und Derivat abgeleitet von HDI oder IPDI, insbesondere HDI, ist, vorzugsweise weist es einen NCO-Gehalt von 16 bis 25 Gewichts-%, vorzugsweise 20 bis 25 Gewichts-%, auf.

9. Zusammensetzung gemäss einem der vorhergehenden Ansprüche, **dadurch gekennzeichnet, dass** die zweite Komponente zusätzlich ein aliphatisches Diisocyanat **B2** der Formel (V)
OCN-(CH2)ₓ-G-(CH2)_{y}-NCO
aufweist, wobei x und y unabhängig voneinander für einen Wert von 4-10, insbesondere 4-8, stehen und G folgende chemische Struktur aufweist: -N(CO-OR)-C(O)-N(H)-, wobei R ein organischer Rest, insbesondere eine C1-C20-Alkyl-Gruppe, ist, die substituiert oder unsubstituiert sein kann und vorzugsweise alkoxyliert ist.

10. Zusammensetzung gemäss einem der vorhergehenden Ansprüche, **dadurch gekennzeichnet, dass** die Zusammensetzung unmittelbar nach dem Mischen der beiden Komponenten, insbesondere für 30 Sekunden bei 2000 Umdrehungen/min, gemessen mit einem Physica MCR 301 Platte-Platte Rheometer bei 20°C, mit einem Messspalt von 0,5 mm gemäss DIN 53019-1 und bei einer Scherrate von 343 U/min, eine Viskosität von 1000 - 7000 mPas, vorzugsweise 2000 - 5000 mPas, insbesondere 3000 - 4000 mPas, aufweist.

11. Zusammensetzung gemäss einem der vorhergehenden Ansprüche, **dadurch gekennzeichnet, dass** das Verhältnis der Isocyanatgruppen gegenüber den zu Isocyanatgruppen reaktiven Gruppen, insbesondere Amino-Gruppen, im Bereich von 0.8 bis 1.2, bevorzugt im Bereich von 0.9 bis 1.1, besonders bevorzugt im Bereich von 0.95 bis 1.05, liegt.

12. Verwendung einer Zusammensetzung gemäss einem der Ansprüche 1 bis 11 als Beschichtung, insbesondere als Korrosionsschutzbeschichtung.

13. Verwendung gemäss Anspruch 12 in einem Beschichtungssystem, umfassend
- vorzugsweise keinen Primer, insbesondere keinen Epoxidharz-basierten Primer, vorzugsweise mit einer Schichtdicke im Bereich von 80 bis 500 µm, insbesondere 100 bis 300 µm, und
- mindestens eine Schicht der in den Ansprüchen 1 bis 11 beschriebenen Zusammensetzung, vorzugsweise mit einer Gesamtschichtdicke im Bereich von 50 bis 800 µm, 200 bis 700 µm, 300 bis 700 µm, insbesondere 400 bis 600 µm.

14. Verfahren umfassend den Schritt der Applikation einer Zusammensetzung gemäss einem der Ansprüche 1 bis 11 als Beschichtung, insbesondere Korrosionsschutzbeschichtung, auf ein Substrat, insbesondere Metalle oder Legierungen, vorzugsweise atmosphärisch belastete Substrate.

15. Artikel erhalten aus einem einer Verwendung gemäss einer der Ansprüche 12 oder 13 oder einem Verfahren gemäss Anspruch 14.
